# EUROPEAN PATENT SPECIFICATION

(11) **EP 3 051 281 B1**
(45) Date of publication and mention of the grant of the patent: **29.09.2021**
(21) Application number: 16152470.7
(22) Date of filing: 22.01.2016
(51) Int. Cl.: G01N 27/419, F02D 41/14

(54) **GAS SENSOR**
GASSENSOR
CAPTEUR DE GAZ

(30) Priority: 27.01.2015 JP 2015012967
(43) Date of publication of application: 03.08.2016
(73) Proprietor: NGK Insulators, Ltd., Nagoya-city, Aichi 467-8530 (JP)
(72) Inventor: OKAMOTO, Taku, Nagoya city, Aichi 467-8530 (JP); NAKASONE, Osamu, Nagoya city, Aichi 467-8530 (JP); NAKAYAMA, Yuki, Nagoya city, Aichi 467-8530 (JP)
(74) Representative: Mewburn Ellis LLP

(56) References cited:
- EP-A1- 1 912 064
- EP-A1- 2 237 029
- EP-A1- 2 833 135
- JP-A- 2001 013 106
- JP-A- 2003 287 518
- JP-A- 2004 177 165

## Description

### BACKGROUND OF THE INVENTION

### Field of the Invention

The present invention relates to a gas sensor that detects water vapor of a measurement gas.

### Description of the Background Art

For example, in combustion control of internal combustion engines such as vehicle engines, environmental control such as exhaust gas control, or various fields including medical, biotechnology, and agriculture and industry fields, there are needs for accurately obtaining the concentration of a target gas component. Various measurement and evaluation techniques and apparatuses have conventionally been researched and studied in response to such needs.

For example, it is well known that in theory, a limiting-current type oxygen sensor can measure a water vapor concentration and a carbon dioxide concentration, as well as an oxygen concentration (for example, see Hideaki Takahashi, Keiichi Saji, Haruyoshi Kondo, "Thin-film Limiting-current Type Oxygen Sensor," Vol. 27 No. 2 pp.47-57, R&D Review of Toyota Central R&D Labs., Inc.).

The apparatus that measures carbon dioxide and water is well known, which includes two sensors each including two oxygen pumping cells and obtains a carbon dioxide concentration and a water (water vapor) concentration by an inverse matrix operation based on the pumping currents in the four pumping cells (for example, see Japanese Examined Patent Application Publication No. 06-76990 (1994)).

In the actual measurement of the concentration of water vapor in an engine exhaust gas, based on the principle as disclosed in Takahashi et al., using an oxygen sensor for vehicle exhaust gas, the decomposition of CO₂ occurs at the decomposition voltage comparable to the decomposition voltage of H₂O, leading to interference. For this reason, water vapor sensors based on this principle have not been put into practical use.

The measurement apparatus disclosed in Japanese Examined Patent Application Publication No. 06-76990 (1994) is intended to measure a water (water vapor) concentration based on the difference between the amount of O₂ generated from the decomposition of H₂O and the decomposition of O₂ when H₂O is not decomposed, so a complicated calibration process is required. Additionally, a complex inverse matrix operation is required to calculate a concentration. That is to say, the technology disclosed in Japanese Examined Patent Application Publication No. 06-76990 (1994) requires a complicated, costly measurement apparatus.

JP 2001013106 A relates to the deterioration prevention method of a gas sensor and a gas sensor which measures combustible gas, such as oxides, such as NO, NO₂, SO₂, CO₂, H₂O contained in the exhaust gas of a vehicle.

### SUMMARY OF THE INVENTION

The present invention relates to a gas sensor that detects water vapor of a measurement gas.

According to the present invention as defined in independent claim 1, a gas sensor, which has a sensor element formed of an oxygen-ion conductive solid electrolyte and identifies a concentration of a water vapor component of a measurement gas based on a current flowing through the solid electrolyte, includes: a first diffusion control part that is in communication with the outside and applies a first diffusion resistance to the measurement gas; a first internal space that is in communication with the first diffusion control part, into which the measurement gas is introduced with the first diffusion resistance from the outside; a second diffusion control part that is in communication with the first internal space and applies a second diffusion resistance to the measurement gas; a second internal space that is in communication with the second diffusion control part, into which the measurement gas is introduced with the second diffusion resistance from the first internal space; a main electrochemical pumping cell formed of a main internal electrode formed to face the first internal space, a first external electrode formed on an outer surface of the sensor element, and the solid electrolyte located between the main internal electrode and the first external electrode; a measuring electrochemical pumping cell formed of a measuring internal electrode formed to face the second internal space, a second external electrode formed on the outer surface of the sensor element, and the solid electrolyte located between the measuring internal electrode and the second external electrode, said first measuring internal electrode being the sole electrode facing said second internal space; a reference gas space into which a reference gas is introduced; and a reference electrode formed to face the reference gas space. A metal component of the measuring internal electrode contains an alloy of gold and a noble metal other than gold. A gold abundance ratio of the metal component is 25 at% or higher on a surface of the measuring internal electrode. The main electrochemical pumping cell is configured and disposed to adjust an oxygen partial pressure of the first internal space such that substantially all of the water vapor component is decomposed in the first internal space. The measuring electrochemical pumping cell is configured and disposed to adjust an oxygen partial pressure of the second internal space such that hydrogen generated by the decomposition of the water vapor component selectively burns in the second internal space. The gas sensor is configured and disposed to identify the concentration of the water vapor component existing in the measurement gas based on the magnitude of a current flowing between the measuring internal electrode and the second external electrode when the measuring electrochemical pumping cell supplies oxygen to the second internal space.

According to the present invention, even when a measurement gas contains carbon dioxide, the concentration of water vapor can be obtained accurately without interference from carbon dioxide.

The present invention therefore has an object to provide a gas sensor capable of accurately obtaining the concentration of water vapor of a measurement gas containing a non-target gas component.

The present invention also relates to a method of measuring concentration of a water vapor component of a measurement gas as defined in independent claim 9.

Other aspects of the invention are set out in dependent claims 2 to 8 and 10 to 14.

### BRIEF DESCRIPTION OF THE DRAWINGS

FIG. 1 is a schematic cross-sectional view of the structure of a gas sensor 100;
FIG. 2 schematically shows a graph showing the functional relationship between the absolute value of a water vapor detection current Ip1 and the actual water vapor concentration; and
FIGS. 3A, 3B, 3C, 3D, 3E, and 3F show evaluation results of sensitivity characteristics on the gas sensor 100 in conditions 1 to 6.

### DESCRIPTION OF THE PREFERRED EMBODIMENTS

### Outline Configuration of Gas Sensor

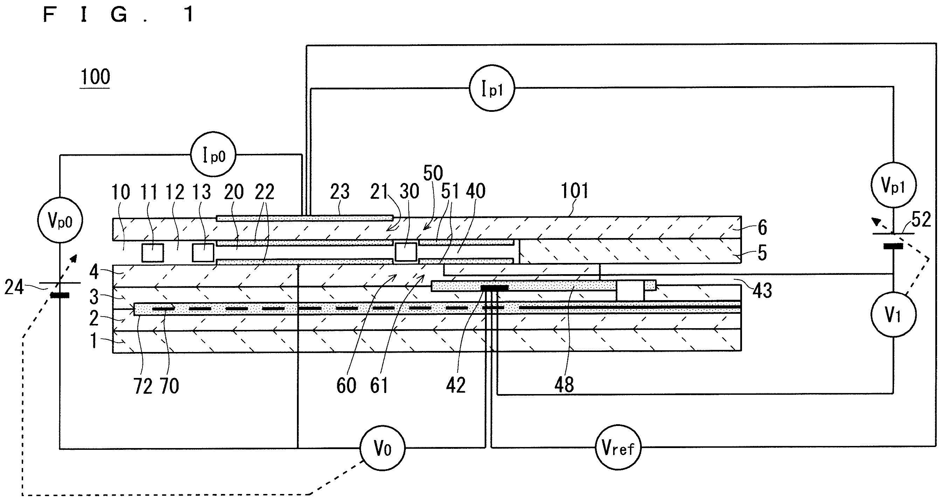

FIG. 1 is a schematic cross-sectional view of the structure of a gas sensor 100 according to an embodiment of the present invention. The gas sensor 100 according to this embodiment serves to detect water vapor (H₂O) and obtain the concentration thereof. A sensor element 101 being a main part thereof includes, as a structural material, ceramic mainly composed of zirconia that is an oxygen-ion conductive solid electrolyte.

The sensor element 101 has the structure in which six layers, namely, a first substrate layer 1, a second substrate layer 2, a third substrate layer 3, a first solid electrolyte layer 4, a spacer layer 5, and a second solid electrolyte layer 6, each formed of an oxygen-ion conductive solid electrolyte, are laminated in the stated order from the bottom side of FIG. 1. The solid electrolytes forming these six layers are fully airtight. The sensor element 101 is manufactured in, for example, a so-called green sheet process in which ceramic green sheets individually corresponding to layers are subjected to predetermined processing, printing of a circuit pattern, and the like, are laminated, and are then fired to be integrated.

Provided between the lower surface of the second solid electrolyte layer 6 and the upper surface of the first solid electrolyte layer 4 on one-end-portion side of the sensor element 101 are a gas inlet 10, a first diffusion control part 11, a first internal space 20, a second diffusion control part 30, and a second internal space 40. A buffer space 12 and a fourth diffusion control part 13 may be further provided between the first diffusion control part 11 and the first internal space 20. The gas inlet 10, the first diffusion control part 11, the buffer space 12, the fourth diffusion control part 13, the first internal space 20, the second diffusion control part 30, and the second internal space 40 are adjacently formed so as to communicate with each other in the stated order. The part extending from the gas inlet 10 to the second internal space 40 is referred to as a gas distribution part as well.

The gas inlet 10, the buffer space 12, the first internal space 20, and the second internal space 40 are interior spaces provided by hollowing out the spacer layer 5. The buffer space 12, the first internal space 20, and the second internal space 40 are each provided, with its upper portion defined by the lower surface of the second solid electrolyte layer 6, its lower portion defined by the upper surface of the first solid electrolyte layer 4, and its side portion defined by the side surface of the spacer layer 5.

The first diffusion control part 11, the second diffusion control part 30, and the fourth diffusion control part 13 are each provided as two horizontally long slits (which are openings longitudinally extending to be vertical to the sheet of FIG. 1).

At a position that is between an upper surface of the third substrate layer 3 and a lower surface of the spacer layer 5 and is farther from the distal-end side than the gas distribution part, a reference gas introduction space 43 is provided. The reference gas introduction space 43 is an interior space with its upper portion defined by the lower surface of the spacer layer 5, its lower portion defined by the upper surface of the third substrate layer 3, and its side portion defined by the side surface of the first solid electrolyte layer 4. For example, oxygen or air is introduced into the reference gas introduction space 43 as a reference gas.

The gas inlet 10 is a part being open to the outside. Through this gas inlet 10, a measurement gas is taken into the sensor element 101 from the outside.

The first diffusion control part 11 is a part that applies a predetermined diffusion resistance to the measurement gas taken through the gas inlet 10.

The buffer space 12 is provided to cancel concentration fluctuations of the measurement gas which are caused due to pressure fluctuations of the measurement gas in the outside (in the case where the measurement gas is a vehicle exhaust gas, pulsations of the exhaust gas pressure). The sensor element 101 does not necessarily need to include the buffer space 12.

The fourth diffusion control part 13 is a part that applies a predetermined diffusion resistance to the measurement gas introduced from the buffer space 12 into the first internal space 20. The fourth diffusion control part 13 is a part provided in association with the provision of the buffer space 12.

The first diffusion control part 11 and the first internal space 20 directly communicate with each other if the buffer space 12 and the third diffusion control part 13 are not provided.

The first internal space 20 is provided as a space for adjusting an oxygen partial pressure of the measurement gas introduced through the gas inlet 10. This oxygen partial pressure is adjusted through the operation of a main pumping cell 21.

The main pumping cell 21 is an electrochemical pumping cell (main electrochemical pumping cell) formed of a main inside pump electrode 22, an outside pump electrode 23, and the oxygen-ion conductive solid electrolyte sandwiched between these electrodes. The main inside pump electrode 22 is provided on substantially the entire upper surface of the first solid electrolyte layer 4, substantially the entire lower surface of the second solid electrolyte layer 6, and substantially the entire side surface of the spacer layer 5, those surfaces defining the first internal space 20. The outside pump electrode 23 is provided in the region corresponding to the main inside pump electrode 22 on the upper surface of the second solid electrolyte layer 6 so as to be exposed to the outside. The main inside pump electrode 22 and the outside pump electrode 23 are each formed as a porous cermet electrode rectangular in plan view, specifically, as a cermet electrode made of platinum (Pt) and zirconia (ZrO₂).

The main pumping cell 21 causes, upon application of a pump voltage VpO by a variable power source 24 provided outside the sensor element 101, a pump current Ip to flow between the outside pump electrode 23 and the main inside pump electrode 22, allowing oxygen in the first internal space 20 to be pumped out to the outside or outside oxygen to be pumped into the first internal space 20.

In the sensor element 101, the main inside pump electrode 22, a reference electrode 42 sandwiched between the upper surface of the third substrate layer 3 and the first solid electrolyte layer 4, and the oxygen-ion conductive solid electrolyte sandwiched between these electrodes constitute a first oxygen-partial-pressure detection sensor cell 60 being an electrochemical sensor cell. The reference electrode 42 is an electrode substantially rectangular in plan view, which is formed of a porous cermet similar to, for example, the outside pump electrode. Provided around the reference electrode 42 is a reference gas introduction layer 48 that is made of porous alumina and is continuous with the reference gas introduction space 43, so that the reference gas of the reference gas introduction space 43 is introduced to the surface of the reference electrode 42. In the first oxygen-partial-pressure detection sensor cell 60, an electromotive force VO is generated between the main inside pump electrode 22 and the reference electrode 42, which results from the oxygen concentration difference between the atmosphere in the first internal space 20 and the reference gas of the reference gas introduction space 43.

The electromotive force VO generated in the first oxygen-partial-pressure detection sensor cell 60 varies in accordance with the oxygen partial pressure in the atmosphere existing in the first internal space 20. The sensor element 101 uses this electromotive force VO to feedback-control the variable power source 24 for the main pumping cell 21. This allows the pump voltage Vp0, which is applied to the main pumping cell 21 by the variable power source 24, to be controlled in accordance with the oxygen partial pressure in the atmosphere of the first internal space 20.

The second diffusion control part 30 is a part that applies a predetermined diffusion resistance to the measurement gas introduced from the first internal space 20 into the second internal space 40.

The second internal space 40 is provided as a space for performing the process for measuring the concentration of water vapor of the measurement gas introduced through the second diffusion control part 30. In the second internal space 40, oxygen can be supplied from the outside by the operation of a measuring pumping cell 50.

The measuring pumping cell 50 is an electrochemical pumping cell (measuring electrochemical pumping cell) formed of a measuring inside pump electrode 51, the outside pump electrode 23, and the oxygen-ion conductive solid electrolyte sandwiched between these electrodes. The measuring inside pump electrode 51 is provided on substantially the entire upper surface of the first solid electrolyte layer 4, substantially the entire lower surface of the second solid electrolyte layer 6, and substantially the entire side surface of the spacer layer 5, those surfaces defining the second internal space 40. The measuring inside pump electrode 51 is formed as a porous cermet electrode rectangular in plan view. Specifically, the measuring inside pump electrode 51 is preferably formed as a cermet electrode of ZrO₂ and an alloy of Au (gold) and any other noble metal (such as platinum (Pt), palladium (Pd), rhodium (Rh), or ruthenium (Ru), which is hereinafter referred to as an "alloy-forming metal"). Alternatively, the measuring inside pump electrode 51 may be formed as an electrode of only the alloy or only Au.

The use of the outside pump electrode 23 is not necessarily required, and any other cermet electrode provided on the outer surface of the sensor element 101 may form the measuring pumping cell 50, in place of the outside pump electrode 23.

The measuring pumping cell 50 causes, upon application of a pump voltage Vp1 by a variable power source 52 provided outside the sensor element 101, a pump current (water vapor detection current) Ip1 to flow between the outside pump electrode 23 and the measuring inside pump electrode 51, so that oxygen can be pumped into the second internal space 40 (particularly to near the surface of the measuring inside pump electrode 51).

Specifically, the measuring inside pump electrode 51 is formed such that the abundance ratio of Au (hereinafter, referred to as a Au abundance ratio) on the surface thereof is 25 at% or higher. Such a requirement is provided to substantially prevent the oxidation of carbon monoxide (CO) (to inactivate carbon monoxide) in the measuring inside pump electrode 51 with the use of the property that Au is inert toward carbon monoxide (CO). By satisfying such a requirement, even when the measurement gas contains carbon dioxide, the gas sensor 100 can accurately obtain the water vapor concentration without interference from carbon dioxide. This will be described below.

Herein, the Au abundance ratio on the surface of the measuring inside pump electrode 51 means an area of a portion containing Au to an area of the entire metal portion (portion containing any of Au and alloy-forming metal) on the surface of the measuring inside pump electrode 51. In this embodiment, the Au abundance ratio is calculated from a peak intensity of a peak detected for Au and alloy-forming metal, obtained by X-ray photoelectron spectroscopy (XPS), using a relative sensitivity coefficient method.

The upper limit of the Au abundance ratio is not particularly limited and can take any values up to 100 at% in theory, but there is substantially no difference in measurement accuracy in the range of 25 at% or higher described above. In particular, in the manufacture of the sensor element 101 in the green sheet process, when the formation of the measuring inside pump electrode 51 is performed by the application (printing) of a paste for forming the electrode (electrode paste) and then by cofiring of the ceramic green sheets formed of solid electrolytes, in light of the cost and ease of manufacture, it suffices that the Au abundance ratio is 55 at% at most. The Au abundance ratio may not be necessarily increased to be higher than 55 at%. The electrode paste may be produced after producing an alloy powder of Au and alloy-forming metal in advance or may be produced using a mixed powder of powdered Au and powdered alloy-forming metal. In the latter case, alloying is performed in cofiring.

In the sensor element 101, the measuring inside pump electrode 51, the reference electrode 42, and the oxygen-ion conductive solid electrolyte sandwiched between these electrodes constitute a second oxygen-partial-pressure detection sensor cell 61 being an electrochemical sensor cell. In the second oxygen-partial-pressure detection sensor cell 61, an electromotive force VI is generated between the measuring inside pump electrode 51 and the reference electrode 42, which results from the oxygen concentration difference between the reference gas of the reference gas introduction space 43 and the atmosphere of the second internal space 40, particularly near the surface of the measuring inside pump electrode 51.

The electromotive force VI generated in the second oxygen-partial-pressure detection sensor cell 61 varies in accordance with the oxygen partial pressure in the atmosphere existing near the surface of the measuring inside pump electrode 51. The sensor element 101 uses this electromotive force VI to feedback-control the variable power source 52 for the measuring pumping cell 50. This allows the pump voltage Vp1, which is applied to the measuring pumping cell 50 by the variable power source 52, to be controlled in accordance with the oxygen partial pressure of the atmosphere near the surface of the measuring inside pump electrode 51.

The sensor element 101 is also configured to measure an electromotive force V_{ref} generated between the outside pump electrode 23 and the reference electrode 42 to obtain the oxygen partial pressure outside the sensor element 101.

In the sensor element 101, further, a heater 70 is formed to be vertically sandwiched between the second substrate layer 2 and the third substrate layer 3. The heater 70 generates heat by power feeding from the outside through a heater electrode (not shown) provided on the lower surface of the first substrate layer 1. Heat generation by the heater 70 increases the oxygen-ion conductivity of the solid electrolyte forming the sensor element 101. The heater 70 is buried over the entire area extending from the first internal space 20 to the second internal space 40 to heat a predetermined portion of the sensor element 101 to a predetermined temperature or maintain the temperature of the predetermined portion at a predetermined temperature. Formed on the upper and lower surfaces of the heater 70 is a heater insulating layer 72 made of, for example, alumina to obtain electrical insulation between the second substrate layer 2 and the third substrate layer 3 (hereinafter, the heater 70, the heater electrode, and the heater insulating layer 72 are correctively referred to as a heater part as well).

### Measurement of Water Vapor Concentration

The technique of identifying the concentration of water vapor of a measurement gas with the gas sensor 100 having the above-mentioned configuration will be described next.

First, the sensor element 101 is placed in the atmosphere of the measurement gas containing oxygen, water vapor, carbon dioxide, and nonflammable (inert) gases. So, the measurement gas is introduced into the sensor element 101 through the gas inlet 10. The measurement gas that has been introduced into the sensor element 101 reaches the first internal space 20, following the application of a predetermined diffusion resistance by the first diffusion control part 11 or further by the fourth diffusion control part 13.

In the first internal space 20, through the operation of the main pumping cell 21, oxygen is pumped out such that the oxygen partial pressure of the inside measurement gas has a sufficiently low predetermined value (for example, 10⁻¹⁰ atm to 10⁻³⁰ atm) to an extent that substantially all the water vapor contained in the measurement gas is decomposed. Herein, "substantially all the water vapor contained in the measurement gas is decomposed" means that the water vapor introduced into the first internal space 20 is not introduced into the second internal space 40.

When oxygen is pumped out of the first internal space 20 in this manner, the decomposition reaction of water vapor (2H₂O→2H₂+O₂) is promoted in the first internal space 20 to generate hydrogen and oxygen. Of those, oxygen is pumped out by the main pumping cell 21, but hydrogen is introduced into the second internal space 40 together with the other gases. Similarly, under the condition that the measurement gas that has reached the first internal space 20 from the sensor element 101 contains carbon dioxide, the decomposition reaction of carbon dioxide (2CO₂→2CO+O₂) occurs as in the case of water vapor because the decomposition voltage of water vapor is close to that of carbon dioxide. Consequently, carbon monoxide and oxygen are generated. The carbon monoxide generated in this manner is also introduced into the second internal space 40.

Actual pumping-out of oxygen is implemented in a manner that a target value of the electromotive force V0, which is generated between the inside pump electrode 22 and the reference electrode 42 in the first oxygen-partial-pressure detection sensor cell 60, is preliminarily determined to such a predetermined value as to obtain the above-mentioned oxygen partial pressure, then the variable power source 24 controls the pump voltage VpO to be applied to the main pumping cell 21 in accordance with the difference between the actual value of the electromotive force VO and the target value. For example, when the measurement gas containing a large amount of oxygen reaches the first internal space 20, the value of the electromotive force VO varies considerably from the target value. In this case, the variable power source 24 controls the pump voltage VpO to be applied to the main pumping cell 21 in order to reduce such a variation.

The target value of the electromotive force VO is preferably set such that a (target) oxygen partial pressure in the first internal space 20 becomes lower as the oxygen partial pressure of the measurement gas that has reached the first internal space 20 becomes higher (as the difference between the measured value of the electromotive force VO and the latest determined target value becomes larger). This allows oxygen to be pumped out more reliably.

The measurement gas which has an oxygen partial pressure decreased as described above reaches the second internal space 40, following the application of a predetermined diffusion resistance by the second diffusion control part 30.

In the second internal space 40, pumping-in of oxygen is performed through the operation of the measuring pumping cell 50. This pumping-in of oxygen is performed to cause, of the measurement gas that has reached a position near the surface of the measuring pumping cell 50 in the second internal space 40 and contains the hydrogen generated in the first internal space 20, only hydrogen to selectively react with the oxygen existing at the position to burn. That is to say, oxygen is pumped in by the measuring pumping cell 50 such that the reaction 2H₂+O₂→2H₂O is promoted to again generate an amount of water vapor correlated with the amount of water vapor introduced through the gas inlet 10. In this embodiment, being "correlated with the amount of water vapor" means that the amount of water vapor introduced through the gas inlet 10 and the amount of the water vapor generated again by burning of the hydrogen generated by the decomposition of water vapor are equal to each other or fall within a constant error range allowable from the perspective of measurement accuracy.

As described above, when the measurement gas that has reached the first internal space 20 from the outside of the sensor element 101 contains carbon dioxide, carbon monoxide generated by the decomposition of carbon dioxide in the first internal space 20 also reaches the second internal space 40. However, the measuring inside pump electrode 51 is inert toward carbon monoxide, and thus, even when oxygen is pumped into the second internal space 40 for regeneration of water vapor described above, carbon monoxide will not react with oxygen in the measuring inside pump electrode 51. That is to say, carbon dioxide will not be regenerated in the second internal space 40. This means that in the gas sensor 100 according to this embodiment, even when the measurement gas contains carbon dioxide, the value of the water vapor detection current Ip1 is not affected by the presence of carbon dioxide of the measurement gas.

Actual pumping-in of oxygen is implemented in a manner that a target value of the electromotive force VI, which is generated between the measuring inside pump electrode 51 and reference electrode 42 in the second oxygen-partial-pressure detection sensor cell 61, is preliminarily determined to such a predetermined value as to obtain an oxygen partial pressure high enough to burn all of the hydrogen contained in the measurement gas that has reached near the surface of the measuring inside pump electrode 51 and to substantially cause no burning of carbon monoxide contained in the measurement gas, and then the variable power source 52 controls the pump voltage Vp1 to be applied to the measuring pumping cell 50 in accordance with the difference between the actual value of the electromotive force VI and the target value. For example, when the measurement gas containing a large amount of hydrogen reaches near the measuring inside pump electrode 51 and reacts with oxygen, an oxygen partial pressure decreases, which causes the value of the electromotive force VI to vary considerably from the target value. In this case, the variable power source 52 controls the pump voltage Vp1 to be applied to the measuring pumping cell 50 so as to reduce the above-mentioned variations.

The current (water vapor detection current) Ip1 flowing through the measuring pumping cell 50 is approximately proportional to the concentration of the water vapor generated by burning of hydrogen near the surface of the measuring inside pump electrode 51 (the water vapor detection current Ip1 and the water vapor concentration have a linear relationship). The amount of the water vapor generated through such burning has a correlation with the amount of water vapor of the measurement gas, which has been introduced through the gas inlet 10 and then decomposed once in the first internal space 20. Thus, detecting the water vapor detection current Ip1 allows the concentration of water vapor of the measurement gas to be obtained based on the value of the water vapor detection current Ip1. How to actually identify the water vapor concentration will be described below.

If the measurement gas introduced through the gas inlet 10 contains no water vapor, needless to say, the decomposition of the water vapor in the first internal space 20 does not occur, and accordingly, hydrogen is not introduced into the second internal space 40. Thus, the electromotive force V1 keeps a target value while a slight amount of water vapor detection current Ip1, which corresponds to an offset current OFS2 described below, flows.

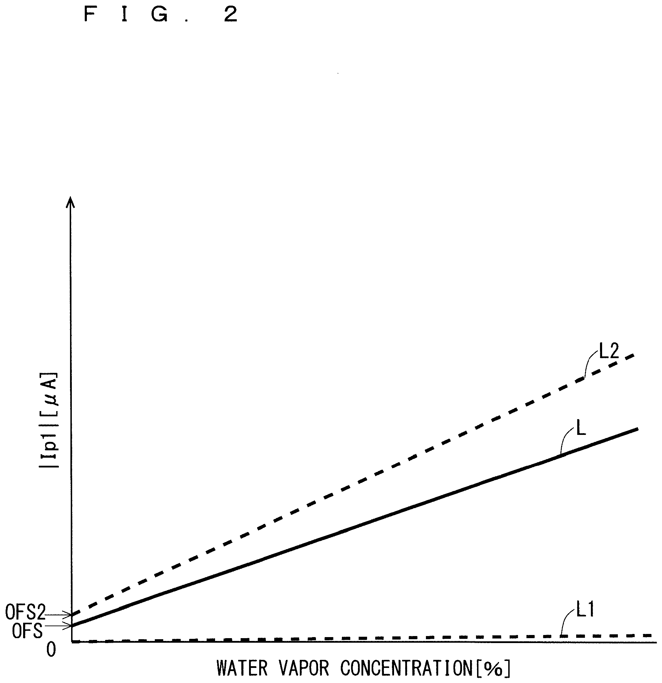

FIG. 2 schematically shows a graph (sensitivity characteristics) showing the functional relationship between an absolute value of the water vapor detection current Ip1 and an actual water vapor concentration. FIG. 2 shows the value of the water vapor detection current Ip1 by an absolute value for brevity of description. In the description below including the figures, every unit of gas concentration is vol%. More specifically, when oxygen is pumped in near the surface of the measuring inside pump electrode 51 in the gas sensor 100 of FIG. 1, the water vapor detection current Ip1 has a negative value, and sensitivity characteristics corresponding to the value are obtained.

FIG. 2 illustrates an ideal functional relationship between the water vapor detection current Ip1 and water vapor concentration by a solid line L. The solid line L is a straight line with a non-zero intercept on the vertical axis. Although the value of the water vapor detection current Ip1 with zero water vapor concentration (with no water vapor) should be originally zero, in actuality, a slight amount of the pump-in current for obtaining a target oxygen concentration, namely, a slight amount of the water vapor detection current Ip1 flows, even when no water vapor exists. This is because oxygen becomes scarce compared to a target oxygen concentration (oxygen partial pressure) near the surface of the measuring inside pump electrode 51, due to an influence of the main pumping cell 21 pumping out oxygen. In particular, the water vapor detection current Ip1 at this time is referred to as an offset current OFS.

In the gas sensor 100 according to this embodiment, prior to its use, the sensitivity characteristics (specifically, the offset current OFS and the slope of the graph) as shown in FIG. 2 are preliminarily identified for each sensor element 101 based on the value of the water vapor detection current Ip1 obtained when the gas having a known water vapor concentration is supplied to the gas sensor 100. In actually detecting water vapor, the value of the water vapor detection current Ip1 is constantly measured, to thereby obtain a water vapor concentration corresponding to each individual measured value based on the sensitivity characteristics preliminarily identified. The water vapor detection current Ip1 is not affected by carbon dioxide, and thus, needless to say, the water vapor concentration obtained based on the sensitivity characteristics also has a value not affected by the presence of carbon dioxide. That is to say, this means that even when the measurement gas contains carbon dioxide, the gas sensor 100 can obtain the concentration of water vapor without interference from the presence of carbon dioxide.

For accurate measurement of a water vapor concentration in the manner described above, it is necessary that in the determination of sensitivity characteristics as well as in actual use, the water vapor of the measurement gas be decomposed reliably in the first internal space 20 and hydrogen be burned reliably near the surface of the measuring inside pump electrode 51.

To satisfy those needs, the target values of the electromotive force VO in the first oxygen-partial-pressure detection sensor cell 60 and the electromotive force VI in the second oxygen-partial-pressure detection sensor cell 61 are preferably determined so as to satisfy such a relationship that the oxygen partial pressure of the second internal space 40, particularly near the surface of the measuring inside pump electrode 51, is higher than the oxygen partial pressure of the first internal space 20.

If a little amount of oxygen is pumped out by the main pumping cell 21 due to an excessively high oxygen partial pressure in the first internal space 20, the generation of hydrogen by decomposition of water vapor is insufficient, and the measurement gas containing oxygen, and further, the remaining water vapor that has not been decomposed is introduced into near the surface of the measuring inside pump electrode 51. As a result, an amount of oxygen pumped in from near the surface of the measuring inside pump electrode 51 is smaller than an original amount, and thus, in this case, the sensitivity characteristics indicated by the broken line L1 with a gentle slope, shown in FIG. 2, are obtained. When the gas sensor 100 is used in the partial pressure setting described above, the water vapor concentration is calculated to be excessively lower than the actual value, even if the sensitivity characteristics set in advance are correct.

If the oxygen partial pressure targeted near the surface of the measuring inside pump electrode 51 is too low, oxygen is not pumped in sufficiently, and hydrogen remains. Also in this case, the sensitivity characteristics indicated by the broken line L1 with a gentle slope, shown in FIG. 2, are obtained. Needless to say, also in this case, again, accurately calculating concentration is difficult.

If an electrode that is not inert toward carbon monoxide is used as the measuring inside pump electrode 51, oxidation of carbon monoxide also occurs at the position near the surface of the measuring inside pump electrode 51. The sensitivity characteristics in this case have a larger intercept and a steeper slope (the value of the interception is an offset current OFS2), as indicated by a broken line L2 in FIG. 2, than those of the solid line L indicating the actual sensitivity characteristics. When the gas sensor 100 is used in the above-mentioned partial pressure setting, even when the sensitivity characteristics set in advance are correct, a water vapor concentration is calculated to be excessively larger than an actual value.

To reliably obtain the sensitivity characteristics as indicated by the solid line L of FIG. 2, it is more preferable to set the oxygen partial pressure of the first internal space 20 to 10⁻¹⁰ atm to 10⁻³⁰ atm, and the oxygen partial pressure of the second internal space 40, particularly near the surface of the measuring inside pump electrode 51, to 10⁻⁵ atm to 10⁻¹⁵ atm.

As described above, in the gas sensor according to this embodiment, the main pumping cell is operated in the first internal space, so that the measurement gas whose oxygen partial pressure is always set to a constant low value (a value that decomposes all of the water vapor contained) is provided to the second internal space. Then, in the second internal space, particularly near the surface of the measuring inside pump electrode, only hydrogen generated by decomposition of water vapor in the first internal space is selectively burned. The pump current, which flows through the measuring pumping cell for supplying oxygen in the above-mentioned burning, has a linear relationship with the concentration of the water vapor generated by burning of hydrogen, that is, the concentration of the water vapor of the measurement gas introduced through the gas inlet. Based on the linear relationship, the water vapor concentration of the measurement gas can be obtained.

Further, the measuring inside pump electrode is provided so as to be inert toward carbon monoxide, and thus, even when carbon monoxide is generated through the decomposition of carbon dioxide, which has a decomposition voltage close to that of water vapor, by the main pumping cell due to the presence of the carbon dioxide of the measurement gas, oxygen supplied from the measuring pumping cell is not used to generate carbon dioxide. In other words, the pump current flowing through the measuring pumping cell is not affected by carbon dioxide.

Thus, the gas sensor according to this embodiment can accurately obtain the concentration of water vapor without interference from carbon dioxide even when a measurement gas contains carbon dioxide.

Therefore, the gas sensor according to this embodiment can accurately obtain the concentration of water vapor of a measurement gas containing various gases including oxygen, water vapor, carbon dioxide, and nonflammable (inert) gases, such as an exhaust gas from an internal combustion engine, for example, a vehicle engine. In other words, the gas sensor according to this embodiment can be preferably put into practical use as a sensor for exhaust gas in an internal combustion engine.

### [Example]

Five types of gas sensors 100, each having a different Au abundance ratio of the measuring inside pump electrode 51, were produced in the green sheet process using Pt as alloy-forming metal, and the sensitivity characteristics thereof were evaluated using model gases. The gas sensor 100 whose Au abundance ratio is 0 at%, in which the measuring inside pump electrode 51 contains only Pt as a metal component, was also produced and evaluated in a similar manner.

In the cases of the five types of gas sensors 100 whose Au abundance ratio is not 0 at%, an electrode paste produced by mixing powdered Au and powdered Pt was printed on predetermined ceramic green sheets, and Au and Pt were alloyed by cofiring with a laminate of the ceramic green sheets, thereby forming a measuring inside pump electrode 51. In the case of the gas sensor 100 whose Au abundance ratio is 0 at%, an electrode paste was produced using only powdered Pt, and the electrode paste was printed and then cofired, thereby forming a measuring inside pump electrode 51. The Au abundance ratio was calculated based on the results of XPS surface analysis on the measuring inside pump electrodes 51, using the X-ray photoelectron spectrometer (AXIS-HS manufactured by Shimadzu Corporation/KRATOS Analytical). The XPS analysis conditions are as follows:
X-ray source: monochrome Al;
Tube voltage, tube current: 15 kV, 15 mA;
Lens condition: HYBRID;
Area of analysis: square of 600 µm × 1000 µm;
Resolution: Pass Energy 80; and
Scan rate: 200 eV/min. (1 eV step).

A plurality of mixed gases containing oxygen, water vapor, carbon dioxide, and nitrogen as components were prepared as model gases. Specifically, the oxygen concentration was fixed to 10% in all of the model gases, whereas the carbon dioxide concentration and the water vapor concentration were set such that the ratio therebetween (CO₂:H₂O) was varied in three levels, namely, 1:1, 1:2, and 1:3 while varying the water vapor concentration in the range up to 30%. The remaining gas was nitrogen. The range of the water vapor concentration up to 30% is a normal range of the exhaust gas of an internal combustion engine, such as a vehicle engine.

Table 1 shows the Au abundance ratios of the respective measuring inside pump electrodes 51 of a total of six types of gas sensors 100 and Au charge composition ratios (charge Au ratios) of the electrode pastes used to produce the measuring inside pump electrodes 51. The charge Au ratio is a volume ratio of powdered Au to a total amount of powdered Pt and powdered Au.

**[Table 1]**

| | Au abundance ratio at% | Charge Au ratio vol% | Correlation coefficient between H₂O concentration and Ip1 |
|---|---|---|---|
| Condition 1 | 0 | 0 | 0.7951 |
| Condition 2 | 15 | 0.8 | 0.9413 |
| Condition 3 | 25 | 2 | 0.9943 |
| Condition 4 | 35 | 5 | 0.9923 |
| Condition 5 | 45 | 10 | 0.9940 |
| Condition 6 | 52 | 20 | 0.9941 |

As can be seen from Table 1, the Au abundance ratio does not match the charge Au ratio, and the former value tends to be larger than the latter value. This means that when an alloy of Pt and Au is formed by cofiring, Au tends to be thickened on the surface of the alloy particle.

The operating conditions of the gas sensor 100 are as follows:
Oxygen partial pressure of first internal space 20: 10⁻²⁵ atm;
Oxygen partial pressure of second internal space 40: 10⁻¹⁰ atm; and
Heater heating temperature: 850°C.

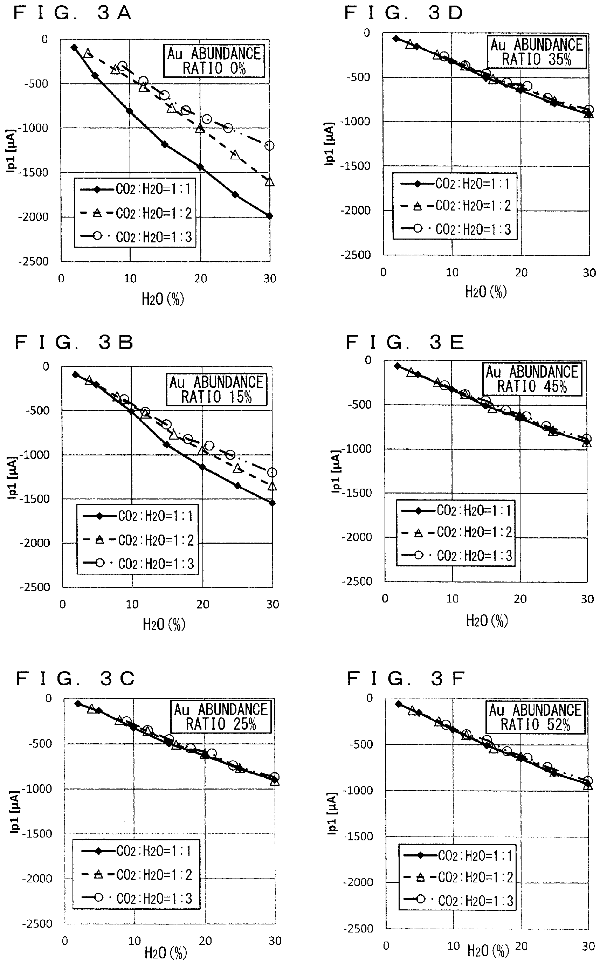

FIGS. 3A, 3B, 3C, 3D, 3E, and 3F show the evaluation results of sensitivity characteristics on the respective gas sensors 100 in conditions 1 to 6 with different Au abundance ratios, which are shown in Table 1. Specifically, FIGS. 3A to 3F show the results obtained by plotting the change in the water vapor detection current Ip1 (µA) against the concentration of water vapor (H₂O) in model gases of the gas sensors 100 in conditions 1 to 6, per ratio (CO₂:H₂O) between carbon dioxide concentration and water vapor concentration.

For each of the conditions 1 to 6 respectively shown in FIGS. 3A to 3F, the correlation coefficients were calculated when all the data points used in plotting were used to linearly approximate a relationship between the water vapor concentration and the water vapor detection current Ip1. Table 1 also shows the results thereof.

As shown in FIG. 3, the sensitivity characteristics varied depending on the value of CO₂:H₂O (FIGS. 3A and 3B) in the condition 1 (where the Au abundance ratio is 0 at%) and the condition 2 (where it is 15 at%), whereas almost the same sensitivity characteristics were obtained irrespective of the value of CO₂:H₂O (FIGS. 3C to 3F) in the condition 3 (where it is 25 at%), the condition 4 (where it is 35 at%), the condition 5 (where it is 45 at%), and the condition 6 (where it is 52at%).

The results indicate that in the gas sensor 100 whose Au abundance ratio is equal to or higher than 25 at%, the presence of carbon dioxide of a measurement gas does not affect the detection of a flowing water vapor detection current Ip1.

In the cases of the conditions 3 to 6 where the Au abundance ratio is equal to or higher than 25 at%, the correlation coefficients calculated based on all the data points exceed 0.99 as shown in Table 1, and thus, it is judged that sensitivity characteristics have good linearity. Besides, the slope of the straight line of plot data is approximately -30 µA/%, and thus, it is judged that sensitivity characteristics which correspond to those of the solid line L of FIG. 2 and which are preferable also in practical use can be obtained in the conditions 3 to 6.

The results above mean that with the use of the gas sensor 100, in which the Au abundance ratio in the measuring inside pump electrode 51 is equal to or higher than 25 at%, a water vapor concentration can be accurately obtained without interference from carbon dioxide even when a measurement gas contains carbon dioxide.

## Claims

1. A gas sensor that has a sensor element (100) formed of an oxygen-ion conductive solid electrolyte (1-6) and identifies a concentration of a water vapor component of a measurement gas based on a current flowing through said solid electrolyte, said gas sensor comprising:
a first diffusion control part (11, 13) that is in communication with the outside and applies a first diffusion resistance to said measurement gas;
a first internal space (20) that is in communication with said first diffusion control part, into which the measurement gas is introduced with said first diffusion resistance from said outside;
a second diffusion control part (30) that is in communication with said first internal space (20) and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte (4, 5, 6) located between said main internal electrode and said first external electrode;
a measuring electrochemical pumping cell (50) formed of a measuring internal electrode (51) formed to face said second internal space, a second external electrode (23) formed on the outer surface of said sensor element, and said solid electrolyte (4, 5, 6) located between said measuring internal electrode and said second external electrode, said first measuring internal electrode (51) being the sole electrode facing said second internal space (40);
a reference gas space (43. 48) into which a reference gas is introduced; and
a reference electrode (42) formed to face said reference gas space, wherein
a metal component of said measuring internal electrode (51) contains an alloy of gold and a noble metal other than gold;
the gold abundance ratio of said metal component is 25 at% or higher on a surface of said measuring internal electrode (51), the Au abundance ratio being the ratio of the area of a portion containing Au to the area of the entire metal portion on the surface of the measuring internal electrode, and the Au abundance ratio being calculated from a peak intensity of a peak detected for Au and for alloy forming material obtained by X-ray photoelectron spectroscopy using a relative sensitivity method;
the gas sensor has means configured and arranged to control said main electrochemical pumping cell (21) so as to adjust an oxygen partial pressure of said first internal space (20) such that substantially all of said water vapor component is decomposed in said first internal space;
the gas sensor has means configured and arranged to control said measuring electrochemical pumping cell (50) so as to adjust an oxygen partial pressure of said second internal space (40) such that hydrogen generated by the decomposition of said water vapor component selectively burns in said second internal space; and
said gas sensor is configured and disposed to identify the concentration of said water vapor component existing in said measurement gas based on the magnitude of a current flowing between said measuring internal electrode (51) and said second external electrode (23) when said measuring electrochemical pumping cell supplies oxygen to said second internal space.

2. The gas sensor according to claim 1, wherein said noble metal comprises platinum.

3. The gas sensor according to claim 1 or 2, wherein said gas sensor is configured and disposed to
adjust a first voltage applied between said main internal electrode (22) and said first external electrode (23) to adjust the oxygen partial pressure of said first internal space (20) such that substantially all of said water vapor component is decomposed, and
adjust a second voltage applied between said measuring internal electrode (51) and said second external electrode (23) to adjust the oxygen partial pressure of said second internal space (40) such that all of the hydrogen generated by the decomposition of said water vapor component burns.

4. The gas sensor according to claim 3, further comprising:
a first oxygen-partial-pressure detection sensor cell (60) formed of said main internal electrode (22), said reference electrode (42), and said solid electrolyte (3-6) located between said main internal electrode and said reference electrode, said first oxygen-partial-pressure detection sensor cell detecting the magnitude of said first voltage; and
a second oxygen-partial-pressure detection sensor cell (61) formed of said measuring internal electrode (51), said reference electrode (42), and said solid electrolyte (3-6) located between said measuring internal electrode and said reference electrode, said second oxygen-partial-pressure detection sensor cell detecting the magnitude of said second voltage,
wherein said gas sensor is configured and disposed to
adjust the oxygen partial pressure of said first internal space (20) based on a detection value of said first voltage in said first oxygen-partial-pressure detection sensor cell (60), and
adjust the oxygen partial pressure of said second internal space (40) based on a detection value of said second voltage in said second oxygen-partial-pressure detection sensor cell.

5. The gas sensor according to any one of claims 1 to 4, wherein said gas sensor is configured and disposed to identify the concentration of said water vapor component while satisfying a relationship that the oxygen partial pressure of said second internal space (40) is higher than the oxygen partial pressure of said first internal space (20).

6. The gas sensor according to claim 5, wherein said gas sensor is configured and disposed to identify the concentration of said water vapor component with
the oxygen partial pressure of said first internal space (20) set to 10⁻¹⁰ atm to 10⁻³⁰ atm, and
the oxygen partial pressure of said second internal space (40) set to 10⁻⁵ atm to 10⁻¹⁵ atm.

7. The gas sensor according to claim 5 or 6, wherein said gas sensor is configured and disposed to set a target oxygen partial pressure in said first internal space (20) to be lower as the oxygen partial pressure in said measurement becomes higher.

8. The gas sensor according to any one of claims 1 to 7, wherein said first external electrode (23) and said second external electrode are (23) shared.

9. A method of measuring concentration of a water vapor component of a measurement gas, by means of a gas sensor that has a sensor element (100) formed of an oxygen-ion conductive solid electrolyte (1-6) and identifies the concentration of the water vapor component of the measurement gas based on a current flowing through said solid electrolyte, said gas sensor comprising:
a first diffusion control part (11, 13) that is in communication with the outside and applies a first diffusion resistance to said measurement gas;
a first internal space (20) that is in communication with said first diffusion control part, into which the measurement gas is introduced with said first diffusion resistance from said outside;
a second diffusion control part (30) that is in communication with said first internal space (20) and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte (4, 5, 6) located between said main internal electrode and said first external electrode;
a measuring electrochemical pumping cell (50) formed of a measuring internal electrode (51) formed to face said second internal space, a second external electrode (23) formed on the outer surface of said sensor element, and said solid electrolyte (4, 5, 6) located between said measuring internal electrode and said second external electrode, said first measuring internal electrode (51) being the sole electrode facing said second internal space (40);
a reference gas space (43. 48) into which a reference gas is introduced; and
a reference electrode (42) formed to face said reference gas space, wherein
a metal component of said measuring internal electrode (51) contains an alloy of gold and noble metal other than gold comprising platinum;
the gold abundance ratio of said metal component is 25 at% or higher on a surface of said measuring internal electrode (51), the Au abundance ratio being the ratio of the area of a portion containing Au to the area of the entire metal portion on the surface of the measuring internal electrode, and the Au abundance ratio being calculated from a peak intensity of a peak detected for Au and for alloy forming material obtained by X-ray photoelectron spectroscopy using a relative sensitivity method;
the method comprising the steps of:
controlling said main electrochemical pumping cell (21) so as to adjust an oxygen partial pressure of said first internal space (20) such that substantially all of said water vapor component is decomposed in said first internal space;
controlling said measuring electrochemical pumping cell (50) so as to adjust an oxygen partial pressure of said second internal space (40) such that hydrogen generated by the decomposition of said water vapor component selectively burns in said second internal space; and
identifying the concentration of said water vapor component existing in said measurement gas based on the magnitude of a current flowing between said measuring internal electrode (51) and said second external electrode (23) when said measuring electrochemical pumping cell supplies oxygen to said second internal space.

10. The method according to claim 9, including:
adjusting a first voltage applied between said main internal electrode (22) and said first external electrode (23) to adjust the oxygen partial pressure of said first internal space (20) such that substantially all of said water vapor component is decomposed, and
adjusting a second voltage applied between said measuring internal electrode (51) and said second external electrode (23) to adjust the oxygen partial pressure of said second internal space (40) such that all of the hydrogen generated by the decomposition of said water vapor component burns.

11. The method according to claim 10, said gas sensor further comprising:
a first oxygen-partial-pressure detection sensor cell (60) formed of said main internal electrode (22), said reference electrode (42), and said solid electrolyte (3-6) located between said main internal electrode and said reference electrode, said first oxygen-partial-pressure detection sensor cell detecting the magnitude of said first voltage; and
a second oxygen-partial-pressure detection sensor cell (61) formed of said measuring internal electrode (51), said reference electrode (42), and said solid electrolyte (3-6) located between said measuring internal electrode and said reference electrode, said second oxygen-partial-pressure detection sensor cell detecting the magnitude of said second voltage,
the method including:
adjusting the oxygen partial pressure of said first internal space (20) based on a detection value of said first voltage in said first oxygen-partial-pressure detection sensor cell (60), and
adjusting the oxygen partial pressure of said second internal space (40) based on a detection value of said second voltage in said second oxygen-partial-pressure detection sensor cell.

12. The method according to any one of claims 9 to 11, including identifying the concentration of said water vapor component while satisfying a relationship that the oxygen partial pressure of said second internal space (40) is higher than the oxygen partial pressure of said first internal space (20).

13. The method according to claim 12, wherein the concentration of said water vapor component is identified with
the oxygen partial pressure of said first internal space (20) set to 10⁻¹⁰ atm to 10⁻³⁰ atm, and
the oxygen partial pressure of said second internal space (40) set to 10⁻⁵ atm to 10⁻¹⁵ atm.

14. The method according to claim 12 or 13, wherein a target oxygen partial pressure in said first internal space (20) is set to be lower as the oxygen partial pressure in said measurement becomes higher.

## Patentansprüche

1. Gassensor, der ein Sensorelement (100) aufweist, das aus einem Sauerstoffionen-leitenden Festelektrolyten (1-6) gebildet ist und eine Konzentration einer Wasserdampfkomponente eines Messgases basierend auf einem durch den Festelektrolyten fließenden Strom identifiziert, wobei der Gassensor Folgendes umfasst:
ein erstes Diffusionssteuerteil (11, 13), das in Kommunikation mit der Außenumgebung steht und einen ersten Diffusionswiderstand auf das Messgas aufbringt;
einen ersten Innenraum (20), der mit dem ersten Diffusionssteuerteil in Kommunikation steht, in das Messgas mit dem ersten Diffusionswiderstand aus der Außenumgebung eingeleitet wird;
ein zweites Diffusionssteuerteil (30), das in Kommunikation mit dem ersten Innenraum (20) steht und einen zweiten Diffusionswiderstand auf das Messgas aufbringt;
einen zweiten Innenraum (40), der mit dem zweiten Diffusionssteuerteil in Kommunikation steht, in den das Messgas mit dem zweiten Diffusionswiderstand aus dem ersten Innenraum eingeleitet wird;
eine elektrochemische Hauptpumpzelle (21), die aus einer Hauptinnenelektrode (22), die dem ersten Innenraum zugewandt ausgebildet ist, einer ersten Außenelektrode (23), die auf einer Außenfläche des Sensorelements ausgebildet ist, und dem Festelektrolyten (4, 5, 6), der zwischen der Hauptinnenelektrode und der ersten Außenelektrode angeordnet ist, gebildet ist;
eine elektrochemische Messpumpzelle (50), die aus einer Messinnenelektrode (51), die dem zweiten Innenraum zugewandt ausgebildet ist, einer zweiten Außenelektrode (23), die auf der Außenfläche des Sensorelements ausgebildet ist, und dem Festelektrolyten (4, 5, 6), der zwischen der Messinnenelektrode und der zweiten Außenelektrode angeordnet ist, gebildet ist, wobei die erste Messinnenelektrode (51) die einzige Elektrode ist, die dem zweiten Innenraum (40) zugewandt ist;
einen Referenzgasraum (43, 48), in den ein Referenzgas eingeleitet wird; und
eine Referenzelektrode (42), die dem Referenzgasraum zugewandt ausgebildet ist, wobei
eine Metallkomponente der Messinnenelektrode (51) eine Legierung aus Gold und einem anderen Edelmetall außer Gold enthält;
das Goldhäufigkeitsverhältnis der Metallkomponente 25 Atom-% oder mehr auf einer Oberfläche der Messinnenelektrode (51) beträgt, wobei das Au-Häufigkeitsverhältnis das Verhältnis der Fläche eines Au-hältigen Abschnitts zu der Fläche des gesamten Metallabschnitts auf der Oberfläche der Messinnenelektrode ist, und das Au-Häufigkeitsverhältnis aus einer Peakintensität eines Peaks berechnet wird, der für Au und ein legierungsbildendes Material mittels Röntgenphotoelektronenspektroskopie unter Verwendung eines Verfahrens mit relativer Empfindlichkeit detektiert wurde;
wobei der Gassensor Mittel aufweist, die zur Steuerung der elektrochemischen Hauptpumpzelle (21) ausgelegt und angeordnet sind, um einen Sauerstoffpartialdruck des ersten Innenraums (20) einzustellen, sodass die im Wesentlichen gesamte Wasserdampfkomponente in dem ersten Innenraum zerlegt wird;
wobei der Gassensor Mittel aufweist, die zur Steuerung der elektrochemischen Messpumpzelle (50) ausgelegt und angeordnet sind, um einen Sauerstoffpartialdruck des zweiten Innenraums (40) einzustellen, sodass der durch die Zerlegung der Wasserdampfkomponente erzeugte Wasserstoff in dem zweiten Innenraum selektiv brennt; und
wobei der Gassensor ausgelegt und angeordnet ist, um die Konzentration der in dem Messgas vorhandenen Wasserdampfkomponente basierend auf der Höhe eines zwischen der Messinnenelektrode (51) und der zweiten Außenelektrode (23) fließenden Stroms zu identifizieren, wenn die elektrochemische Messpumpzelle Sauerstoff in den zweiten Innenraum zuführt.

2. Gassensor nach Anspruch 1, wobei das Edelmetall Platin umfasst.

3. Gassensor nach Anspruch 1 oder 2, wobei der Gassensor ausgelegt und angeordnet ist, um
eine zwischen der Hauptinnenelektrode (22) und der ersten Außenelektrode (23) angelegte erste Spannung einzustellen, um den Sauerstoffpartialdruck des ersten Innenraums (20) einzustellen, sodass die im Wesentlichen gesamte Wasserdampfkomponente zerlegt wird, und
eine zwischen der Messinnenelektrode (51) und der zweiten Außenelektrode (23) angelegte zweite Spannung einzustellen, um den Sauerstoffpartialdruck des zweiten Innenraums (40) einzustellen, sodass der gesamte durch die Zerlegung der Wasserdampfkomponente erzeugte Wasserstoff brennt.

4. Gassensor nach Anspruch 3, der außerdem Folgendes umfasst:
eine erste Sauerstoffpartialdruckdetektion-Sensorzelle (60), die aus der Hauptinnenelektrode (22), der Referenzelektrode (42) und dem Festelektrolyten (3-6), der zwischen der Hauptinnenelektrode und der Referenzelektrode angeordnet ist, gebildet ist, wobei die erste Sauerstoffpartialdruckdetektion-Sensorzelle die Höhe der ersten Spannung detektiert; und
eine zweite Sauerstoffpartialdruckdetektion-Sensorzelle (61), die aus der Messinnenelektrode (51), der Referenzelektrode (42) und dem Festelektrolyten (3-6), der zwischen der Messinnenelektrode und der Referenzelektrode angeordnet ist, gebildet ist, wobei die zweite Sauerstoffpartialdruckdetektion-Sensorzelle die Höhe der zweiten Spannung detektiert,
wobei der Gassensor ausgelegt und angeordnet ist, um
den Sauerstoffpartialdruck des ersten Innenraums (20) basierend auf einem Detektionswert der ersten Spannung in der ersten Sauerstoffpartialdruckdetektion-Sensorzelle (60) einzustellen, und
den Sauerstoffpartialdruck des zweiten Innenraums (40) basierend auf einem Detektionswert der zweiten Spannung in der zweiten Sauerstoffpartialdruckdetektion-Sensorzelle einzustellen.

5. Gassensor nach einem der Ansprüche 1 bis 4, wobei der Gassensor ausgelegt und angeordnet ist, um die Konzentration der Wasserdampfkomponente zu identifizieren, während eine Beziehung erfüllt wird, wonach der Sauerstoffpartialdruck des zweiten Innenraums (40) höher als der Sauerstoffpartialdruck des ersten Innenraums (20) ist.

6. Gassensor nach Anspruch 5, wobei der Gassensor ausgelegt und angeordnet ist, um die Konzentration der Wasserdampfkomponente zu identifizieren, wenn
der Sauerstoffpartialdruck des ersten Innenraums (20) auf 10⁻¹⁰ atm bis 10⁻³⁰ atm festgelegt ist und
der Sauerstoffpartialdruck des zweiten Innenraums (40) auf 10⁻⁵ atm bis 10⁻¹⁵ atm festgelegt ist.

7. Gassensor nach Anspruch 5 oder 6, wobei der Gassensor ausgelegt und angeordnet ist, um festzulegen, dass ein Zielsauerstoffpartialdruck in dem ersten Innenraum (20) niedriger wird, wenn der Sauerstoffpartialdruck in dem Messgas höher wird.

8. Gassensor nach einem der Ansprüche 1 bis 7, wobei die erste Außenelektrode (23) und die zweite Außenelektrode (23) gemeinsam genutzt werden.

9. Verfahren zum Messen der Konzentration einer Wasserdampfkomponente eines Messgases mittels eines Gassensors, der ein Sensorelement (100) aufweist, das aus einem Sauerstoffionen-leitenden Festelektrolyten (1-6) gebildet ist, und die Konzentration der Wasserdampfkomponente des Messgases basierend auf einem durch den Festelektrolyten fließenden Strom identifiziert, wobei der Gassensor Folgendes umfasst:
ein erstes Diffusionssteuerteil (11, 13), das in Kommunikation mit der Außenumgebung steht und einen ersten Diffusionswiderstand auf das Messgas aufbringt;
einen ersten Innenraum (20), der mit dem ersten Diffusionssteuerteil in Kommunikation steht, in das Messgas mit dem ersten Diffusionswiderstand aus der Außenumgebung eingeleitet wird;
ein zweites Diffusionssteuerteil (30), das in Kommunikation mit dem ersten Innenraum (20) steht und einen zweiten Diffusionswiderstand auf das Messgas aufbringt;
einen zweiten Innenraum (40), der mit dem zweiten Diffusionssteuerteil in Kommunikation steht, in den das Messgas mit dem zweiten Diffusionswiderstand aus dem ersten Innenraum eingeleitet wird;
eine elektrochemische Hauptpumpzelle (21), die aus einer Hauptinnenelektrode (22), die dem ersten Innenraum zugewandt ausgebildet ist, einer ersten Außenelektrode (23), die auf einer Außenfläche des Sensorelements ausgebildet ist, und dem Festelektrolyten (4, 5, 6), der zwischen der Hauptinnenelektrode und der ersten Außenelektrode angeordnet ist, gebildet ist;
eine elektrochemische Messpumpzelle (50), die aus einer Messinnenelektrode (51), die dem zweiten Innenraum zugewandt ausgebildet ist, einer zweiten Außenelektrode (23), die auf der Außenfläche des Sensorelements ausgebildet ist, und dem Festelektrolyten (4, 5, 6), der zwischen der Messinnenelektrode und der zweiten Außenelektrode angeordnet ist, gebildet ist, wobei die erste Messinnenelektrode (51) die einzige Elektrode ist, die dem zweiten Innenraum (40) zugewandt ist;
einen Referenzgasraum (43, 48), in den ein Referenzgas eingeleitet wird; und
eine Referenzelektrode (42), die dem Referenzgasraum zugewandt ausgebildet ist, wobei
eine Metallkomponente der Messinnenelektrode (51) eine Legierung aus Gold und einem anderen Edelmetall außer Gold, umfassend Platin, enthält;
das Goldhäufigkeitsverhältnis der Metallkomponente 25 Atom-% oder mehr auf einer Oberfläche der Messinnenelektrode (51) beträgt, wobei das Au-Häufigkeitsverhältnis das Verhältnis der Fläche eines Au-hältigen Abschnitts zu der Fläche des gesamten Metallabschnitts auf der Oberfläche der Messinnenelektrode ist, und das Au-Häufigkeitsverhältnis aus einer Peakintensität eines Peaks berechnet wird, der für Au und ein legierungsbildendes Material mittels Röntgenphotoelektronenspektroskopie unter Verwendung eines Verfahrens mit relativer Empfindlichkeit detektiert wurde;
wobei das Verfahren die folgenden Schritte umfasst:
das Steuern der elektrochemischen Hauptpumpzelle (21), um einen Sauerstoffpartialdruck des ersten Innenraums (20) einzustellen, sodass die im Wesentlichen gesamte Wasserdampfkomponente in dem ersten Innenraum zerlegt wird;
das Steuern der elektrochemischen Messpumpzelle (50), um einen Sauerstoffpartialdruck des zweiten Innenraums (40) einzustellen, sodass der durch die Zerlegung der Wasserdampfkomponente erzeugte Wasserstoff in dem zweiten Innenraum selektiv brennt; und
das Identifizieren der Konzentration der in dem Messgas vorhandenen Wasserdampfkomponente basierend auf der Höhe eines zwischen der Messinnenelektrode (51) und der zweiten Außenelektrode (23) fließenden Stroms, wenn die elektrochemische Messpumpzelle Sauerstoff in den zweiten Innenraum zuführt.

10. Verfahren nach Anspruch 9, das Folgendes umfasst:
das Einstellen einer zwischen der Hauptinnenelektrode (22) und der ersten Außenelektrode (23) angelegten ersten Spannung, um den Sauerstoffpartialdruck des ersten Innenraums (20) einzustellen, sodass die im Wesentlichen gesamte Wasserdampfkomponente zerlegt wird, und
das Einstellen einer zwischen der Messinnenelektrode (51) und der zweiten Außenelektrode (23) angelegten zweiten Spannung, um den Sauerstoffpartialdruck des zweiten Innenraums (40) einzustellen, sodass der gesamte durch die Zerlegung der Wasserdampfkomponente erzeugte Wasserstoff brennt.

11. Verfahren nach Anspruch 10, wobei der Gassensor außerdem Folgendes umfasst:
eine erste Sauerstoffpartialdruckdetektion-Sensorzelle (60), die aus der Hauptinnenelektrode (22), der Referenzelektrode (42) und dem Festelektrolyten (3-6), der zwischen der Hauptinnenelektrode und der Referenzelektrode angeordnet ist, gebildet ist, wobei die erste Sauerstoffpartialdruckdetektion-Sensorzelle die Höhe der ersten Spannung detektiert; und
eine zweite Sauerstoffpartialdruckdetektion-Sensorzelle (61), die aus der Messinnenelektrode (51), der Referenzelektrode (42) und dem Festelektrolyten (3-6), der zwischen der Messinnenelektrode und der Referenzelektrode angeordnet ist, gebildet ist, wobei die zweite Sauerstoffpartialdruckdetektion-Sensorzelle die Höhe der zweiten Spannung detektiert,
wobei das Verfahren Folgendes umfasst:
das Einstellen des Sauerstoffpartialdrucks des ersten Innenraums (20) basierend auf einem Detektionswert der ersten Spannung in der ersten Sauerstoffpartialdruckdetektion-Sensorzelle (60) und
das Einstellen des Sauerstoffpartialdrucks des zweiten Innenraums (40) basierend auf einem Detektionswert der zweiten Spannung in der zweiten Sauerstoffpartialdruckdetektion-Sensorzelle.

12. Verfahren nach einem der Ansprüche 9 bis 11, das das Identifizieren der Konzentration der Wasserdampfkomponente umfasst, während eine Beziehung erfüllt wird, wonach der Sauerstoffpartialdruck des zweiten Innenraums (40) höher als der Sauerstoffpartialdruck des ersten Innenraums (20) ist.

13. Verfahren nach Anspruch 12, wobei die Konzentration der Wasserdampfkomponente identifiziert wird, wenn
der Sauerstoffpartialdruck des ersten Innenraums (20) auf 10⁻¹⁰ atm bis 10⁻³⁰ atm festgelegt ist und
der Sauerstoffpartialdruck des zweiten Innenraums (40) auf 10⁻⁵ atm bis 10⁻¹⁵ atm festgelegt ist.

14. Verfahren nach Anspruch 12 oder 13, wobei ein Zielsauerstoffpartialdruck in dem ersten Innenraum (20) eingestellt ist, niedriger zu werden, wenn der Sauerstoffpartialdruck in dem Messgas höher wird.

## Revendications

1. Capteur de gaz qui comprend un élément de capteur (100) constitué d'un électrolyte solide conducteur à ions oxygène (1 - 6) et qui identifie une concentration de part de vapeur d'eau d'un gaz de mesure sur la base d'un courant circulant à travers ledit électrolyte solide, ledit capteur de gaz comprenant :
une première partie de contrôle de diffusion (11, 13) qui est en communication avec l'extérieur et applique une première résistance à la diffusion audit gaz de mesure ;
un premier espace interne (20) qui est en communication avec ladite première partie de contrôle de diffusion dans laquelle le gaz de mesure est introduit avec ladite première résistance à la diffusion dudit extérieur ;
une deuxième partie de contrôle de diffusion (30) qui est en communication avec ledit premier espace interne (20) et applique une deuxième résistance à la diffusion audit gaz de mesure ;
un deuxième espace interne (40) qui est en communication avec ladite deuxième partie de contrôle de diffusion dans laquelle le gaz de mesure est introduit avec ladite deuxième résistance à la diffusion dudit premier espace interne ;
une cellule de pompage électrochimique principale (21) constituée d'une électrode interne principale (22) formée de façon à faire face audit premier espace interne, d'une première électrode externe (23) formée sur une surface externe dudit élément de capteur et dudit électrolyte solide (4, 5, 6) situé entre ladite électrode interne principale et ladite première électrode externe ;
une cellule de pompage électrochimique de mesure (50) constituée d'une électrode interne de mesure (51) formée de façon à faire face audit deuxième espace interne, d'une deuxième électrode externe (23) formée sur la surface externe dudit élément de capteur et dudit électrolyte solide (4, 5, 6) situé entre ladite électrode interne de mesure et ladite deuxième électrode externe, ladite première électrode interne de mesure (51) étant la seule électrode à faire face audit deuxième espace interne (40) ;
un espace de gaz de référence (43, 48) dans lequel un gaz de référence est introduit ; et
une électrode de référence (42) formée de façon à faire face audit espace de gaz de référence,
dans lequel un composant métallique de ladite électrode interne de mesure (51) contient un alliage d'or et d'un métal noble autre que l'or ;
le ratio d'abondance dudit composant métallique est de 25 % ou plus sur une surface de ladite électrode interne de mesure (51), le ration d'abondance Au étant le ratio entre la superficie d'une portion contenant Au et la superficie de toute la portion métallique sur la surface de l'électrode interne de mesure et le ratio d'abondance Au étant calculé à partir d'une intensité de pic d'un pic détecté pour Au et pour un matériau de formation d'alliage obtenu par spectroscopie photoélectronique à rayons X à l'aide d'un procédé de sensibilité relative ;
le capteur de gaz comprend des moyens conçus et disposés pour contrôler ladite cellule de pompage électrochimique principale (21) de façon à ajuster une pression partielle d'oxygène dudit premier espace interne (20) afin que globalement toute la part de vapeur d'eau soit décomposée dans ledit premier espace interne ;
le capteur de gaz comprend des moyens conçus et disposés pour contrôler ladite cellule de pompage électrochimique de mesure (50) de façon à ajuster une pression partielle d'oxygène dudit deuxième espace interne (40) afin que l'hydrogène généré par la décomposition de ladite part de vapeur d'eau brûle sélectivement dans ledit deuxième espace interne ; et
ledit capteur de gaz est conçu et disposé pour identifier la concentration de ladite part de vapeur d'eau existant dans ledit gaz de mesure sur la base de l'amplitude d'un courant circulant entre ladite électrode interne de mesure (51) et ladite deuxième électrode externe (23) lorsque ladite cellule de pompage électrochimique de mesure alimente en oxygène ledit deuxième espace interne.

2. Capteur de gaz selon la revendication 1, dans lequel ledit métal noble comprend le platine.

3. Capteur de gaz selon la revendication 1 ou 2, dans lequel ledit capteur de gaz est conçu et disposé pour
ajuster une première tension appliquée entre ladite électrode interne principale (22) et ladite première électrode externe (23) pour ajuster la pression partielle d'oxygène dudit premier espace interne (20) afin que globalement toute ladite part de vapeur d'eau soit décomposée et
ajuster une deuxième tension appliquée entre ladite électrode interne de mesure (51) et ladite deuxième électrode externe (23) pour ajuster la pression partielle d'oxygène dudit deuxième espace interne (40) afin que tout l'hydrogène généré par la décomposition de ladite part de vapeur brûle.

4. Capteur de gaz selon la revendication 3, comprenant en outre :
une première cellule de capteur de détection de pression partielle d'oxygène (60) constituée de ladite électrode interne principale (22), de ladite électrode de référence (42) et dudit électrolyte solide (3 - 6) situé entre ladite électrode interne principale et ladite électrode de référence, ladite première cellule de détection de pression partielle d'oxygène détectant l'amplitude de ladite première tension ; et
une deuxième cellule de capteur de détection de pression partielle d'oxygène (61) constituée de ladite électrode interne de mesure (51), de ladite électrode de référence (42) et dudit électrolyte solide (3 - 6) situé entre ladite électrode interne de mesure et ladite électrode de référence, ladite deuxième cellule de détection de pression partielle d'oxygène détectant l'amplitude de ladite deuxième tension,
dans lequel ledit capteur de gaz est conçu et disposé pour
ajuster la pression partielle d'oxygène dudit premier espace interne (20) sur la base d'une valeur de détection de ladite première tension dans ladite première cellule de capteur de détection de pression partielle d'oxygène (60), et
ajuster la pression partielle d'oxygène dudit deuxième espace interne (40) sur la base d'une valeur de détection de ladite deuxième tension dans ladite deuxième cellule de capteur de détection de pression partielle d'oxygène.

5. Capteur de gaz selon l'une des revendications 1 à 4, dans lequel ledit capteur de gaz est conçu et disposé pour identifier les concentrations de ladite part de vapeur d'eau tout en respectant une relation imposant que la pression partielle d'oxygène dudit deuxième espace interne (40) soit supérieure à la pression partielle d'oxygène dudit premier espace interne (20).

6. Capteur de gaz selon la revendication 5, dans lequel ledit capteur de gaz est conçu et disposé pour identifier la concentration de ladite part de vapeur d'eau avec
la pression partielle d'oxygène dudit premier espace interne (20) ajustée de 10⁻¹⁰ atm à 10⁻³⁰ atm,
la pression partielle d'oxygène dudit deuxième espace interne (40) ajustée de 10⁻⁵ atm à 10⁻¹⁵ atm.

7. Capteur de gaz selon la revendication 5 ou 6, dans lequel ledit capteur de gaz est conçu et disposé pour ajuster une pression partielle d'oxygène dans ledit premier espace interne (20) de façon à diminuer lorsque la pression partielle d'oxygène dans ladite mesure augmente.

8. Capteur de gaz selon l'une des revendications 1 à 7, dans lequel ladite première électrode externe (23) et ladite deuxième électrode externe (23) sont partagées.

9. Procédé de mesure de la concentration d'une part de vapeur d'eau d'un gaz de mesure, au moyen d'un capteur de gaz qui comprend un élément de capteur (100) constitué d'un électrolyte solide conducteur à ions oxygène (1 - 6) et qui identifie la concentration d'une part de vapeur d'eau d'un gaz de mesure sur la base d'un courant circulant à travers ledit électrolyte solide, ledit capteur de gaz comprenant :
une première partie de contrôle de diffusion (11, 13) qui est en communication avec l'extérieur et applique une première résistance à la diffusion audit gaz de mesure ;
un premier espace interne (20) qui est en communication avec ladite première partie de contrôle de diffusion dans laquelle le gaz de mesure est introduit avec ladite première résistance à la diffusion dudit extérieur ;
une deuxième partie de contrôle de diffusion (30) qui est en communication avec ledit premier espace interne (20) et applique une deuxième résistance à la diffusion audit gaz de mesure ;
un deuxième espace interne (40) qui est en communication avec ladite deuxième partie de contrôle de diffusion dans laquelle le gaz de mesure est introduit avec ladite deuxième résistance à la diffusion dudit premier espace interne ;
une cellule de pompage électrochimique principale (21) constituée d'une électrode interne principale (22) formée de façon à faire face audit premier espace interne, d'une première électrode externe (23) formée sur une surface externe dudit élément de capteur et dudit électrolyte solide (4, 5, 6) situé entre ladite électrode interne principale et ladite première électrode externe ;
une cellule de pompage électrochimique de mesure (50) constituée d'une électrode interne de mesure (51) formée de façon à faire face audit deuxième espace interne, d'une deuxième électrode externe (23) formée sur la surface externe dudit élément de capteur et dudit électrolyte solide (4, 5, 6) situé entre ladite électrode interne de mesure et ladite deuxième électrode externe, ladite première électrode interne de mesure (51) étant la seule électrode à faire face audit deuxième espace interne (40) ;
un espace de gaz de référence (43, 48) dans lequel un gaz de référence est introduit ; et
une électrode de référence (42) formée de façon à faire face audit espace de gaz de référence,
une électrode de référence (42) formée de façon à faire face audit espace de gaz de référence,
dans lequel un composant métallique de ladite électrode interne de mesure (51) contient un alliage d'or et d'un métal noble autre que l'or comprenant du platine ;
le ratio d'abondance dudit composant métallique est de 25 % ou plus sur une surface de ladite électrode interne de mesure (51), le ratio d'abondance Au étant le ratio entre la superficie d'une portion contenant Au et la superficie de toute la portion métallique sur la surface de l'électrode interne de mesure et le ratio d'abondance Au étant calculé à partir d'une intensité de pic d'un pic détecté pour Au et pour un matériau de formation d'alliage obtenu par spectroscopie photoélectronique à rayons X à l'aide d'un procédé de sensibilité relative ;
ce procédé comprenant les étapes suivantes :
contrôle de ladite cellule de pompage électrochimique principale (21) de façon à ajuster une pression partielle d'oxygène dudit premier espace interne (20) afin que globalement toute la part de vapeur d'eau soit décomposée dans ledit premier espace interne ;
contrôle de ladite cellule de pompage électrochimique de mesure (50) de façon à ajuster une pression partielle d'oxygène dudit deuxième espace interne (40) afin que l'hydrogène généré par la décomposition de ladite part de vapeur d'eau brûle sélectivement dans ledit deuxième espace interne ; et
identification de la concentration de ladite part de vapeur d'eau existant dans ledit gaz de mesure sur la base de l'amplitude d'un courant circulant entre ladite électrode interne de mesure (51) et ladite deuxième électrode externe (23) lorsque ladite cellule de pompage électrochimique de mesure alimente en oxygène ledit deuxième espace interne.

10. Procédé selon la revendication 9, comprenant :
l'ajustement d'une première tension appliquée entre ladite électrode interne principale (22) et ladite première électrode externe (23) pour ajuster la pression partielle d'oxygène dudit premier espace interne (20) afin que globalement toute ladite part de vapeur d'eau soit décomposée et
l'ajustement d'une deuxième tension appliquée entre ladite électrode interne de mesure (51) et ladite deuxième électrode externe (23) pour ajuster la pression partielle d'oxygène dudit deuxième espace interne (40) afin que tout l'hydrogène généré par la décomposition de ladite part de vapeur brûle.

11. Procédé selon la revendication 10, ledit capteur de gaz comprenant en outre :
une première cellule de capteur de détection de pression partielle d'oxygène (60) constituée de ladite électrode interne principale (22), de ladite électrode de référence (42) et dudit électrolyte solide (3 - 6) situé entre ladite électrode interne principale et ladite électrode de référence, ladite première cellule de détection de pression partielle d'oxygène détectant l'amplitude de ladite première tension ; et
une deuxième cellule de capteur de détection de pression partielle d'oxygène (61) constituée de ladite électrode interne de mesure (51), de ladite électrode de référence (42) et dudit électrolyte solide (3 - 6) situé entre ladite électrode interne de mesure et ladite électrode de référence, ladite deuxième cellule de détection de pression partielle d'oxygène détectant l'amplitude de ladite deuxième tension,
ce procédé comprenant :
l'ajustement de la pression partielle d'oxygène dudit premier espace interne (20) sur la base d'une valeur de détection de ladite première tension dans ladite première cellule de capteur de détection de pression partielle d'oxygène (60), et
l'ajustement de la pression partielle d'oxygène dudit deuxième espace interne (40) sur la base d'une valeur de détection de ladite deuxième tension dans ladite deuxième cellule de capteur de détection de pression partielle d'oxygène.

12. Procédé selon l'une des revendications 9 à 11, comprenant l'identification de la concentration de ladite part de vapeur d'eau tout en respectant une relation imposant que la pression partielle d'oxygène dudit deuxième espace interne (40) soit supérieure à la pression partielle d'oxygène dudit premier espace interne (20).

13. Procédé selon la revendication 12, dans lequel la concentration de ladite part de vapeur d'eau est identifiée avec
la pression partielle d'oxygène dudit premier espace interne (20) ajustée de 10⁻¹⁰ atm à 10⁻³⁰ atm,
la pression partielle d'oxygène dudit deuxième espace interne (40) ajustée de 10⁻⁵ atm à 10⁻¹⁵ atm.

14. Procédé selon la revendication 12 ou 13, dans lequel une pression partielle d'oxygène cible dans ledit premier espace interne (20) est ajustée de façon à diminuer lorsque la pression partielle d'oxygène dans ladite mesure augmente.
